# EUROPÄISCHE PATENTSCHRIFT

(11) **EP 1 660 261 B1**
(45) Veröffentlichungstag und Bekanntmachung des Hinweises auf die Patenterteilung: **26.03.2008**
(21) Anmeldenummer: 04764392.9
(22) Anmeldetag: 23.08.2004
(51) Int. Cl.: B23B 27/16, B23C 5/22

(54) **VERFAHREN ZUR HERSTELLUNG EINER SCHNEIDPLATTE AUS PCBN ODER EINEM CBN- VERBUNDWERKSTOFF MIT SPANNMULDE**
METHOD FOR MAKING A DIE CONSISTING OF PCBN OR A CBN COMPOSITE MATERIAL COMPRISING A CLAMPING DEPRESSION
PROCEDE DE FABRICATION D'UNE PLAQUE COUPANTE EN PCBN OU EN MATERIAU COMPOSITE A BASE DE CBN COMPRENANT UN CREUX DE SERRAGE

(30) Priorität: 22.08.2003 DE 10338618; 23.08.2003 DE 10338908; 27.02.2004 DE 202004002977 U; 28.07.2004 DE 102004036619
(43) Veröffentlichungstag der Anmeldung: 31.05.2006
(73) Patentinhaber: CeramTec AG Innovative Ceramic Engineering, 73207 Plochingen (DE)
(72) Erfinder: HAFNER, Andreas, 73035 Göppingen (DE); WEBER, Werner, 51381 Leverkusen (DE); MÜLLER, Matthias, 73230 Kirchheim (DE)
(74) Vertreter: Scherzberg, Andreas Hans
(86) Internationale Anmeldenummer: PCT/EP2004/009411
(87) Internationale Veröffentlichungsnummer: WO 2005/021192

(56) Entgegenhaltungen:
- EP-A- 0 571 914
- EP-A- 0 901 995
- EP-A- 0 937 693
- EP-A- 1 023 961
- WO-A-02/26428
- WO-A-03/015968
- DE-A- 10 208 266

## Beschreibung

Die Erfindung betrifft ein Verfahren zur Herstellung Schneidplatte aus PCBN oder einem CBN-Verbundwerkstoff, wobei die Schneidplatte eine Spannmulde aufweist.

Schneidplatten aus einem keramischen Werkstoff zur spanenden Bearbeitung von metallischen Werkstoffen werden in den unterschiedlichsten Einsatzgebieten verwendet. Seit einigen Jahren wird als Material für solche Schneidplatten auch polykristallines kubisches Bornitrid verwendet. Polykristallines kubisches Bornitrid, auch als PCBN bezeichnet, zeichnet sich u.a. durch eine extrem große Härte aus. Die Eigenschaften des PCBN sind zum Beispiel beschrieben in der Zeitschrift Werkzeuge, Juni 2001, Seiten 16 bis 20 oder in der Zeitschrift WB Werkstatt und Betrieb, Stefan Dillmann, Mischkeramik und PCBN im hartfeinen Duett, Carl Hanser Verlag, München, 6. Juni 2002, 135. Jahrgang, sowie in dem Praxis-Report Nr. 19, Hartdrehen mit SPK-Wurbon und Mischkeramik, Ceram-Tec AG Innovative Ceramic Engineering, Geschäftsbereich SPK-Werkzeuge, Gottlieb-Haefele-Str. 7, D-73061 Ebersbach.

Neben Schneidplatten, die aus PCBN-Vollmaterial bestehen, gibt es darüber hinaus auch Schneidplatten, deren Grundkörper aus Hartmetall besteht und deren Oberfläche mit polykristallinem kubischen Bornitrid belegt sind.

Wird nachfolgend von "Schneidplatte(n) aus PCBN" gesprochen, soll damit sowohl eine Schneidplatte verstanden werden, die als Vollmaterial PCBN enthält, als auch eine Schneidplatte, deren Grundkörper aus Hartmetall besteht und die mit polykristallinem kubischen Bornitrid auf ihrer Oberfläche belegt ist.

Weiterhin sind Schneidkeramiken beschrieben, die aus einem Verbundwerkstoff aus Siliziumnitrid und kubischem Bornitrid bestehen. Dieser CBN-Verbundwerkstoff ist zum Beispiel in der EP 0 937 693 A1 beschrieben und zeichnet sich wie PCBN durch eine extrem große Härte aus. Nicht beschrieben ist eine Spannmulde.

Werden Schneidplatten beispielsweise zur spanenden Bearbeitung von Metall eingesetzt, müssen die Schneidplatten in einem Klemmhalter befestigt werden. Schneidplatten, die nicht aus PCBN- bzw. CBN-Werkstoffen bestehen, sind zur Befestigung in einem Klemmhalter oftmals mit einer Spannmulde versehen, in die eine Klemmpratze des Klemmhalters spannend eingreift. Hierdurch entsteht eine formschlüssige Klemmung durch die die Schneidplatte fest im Klemmhalter verankert ist.

Da Schneidplatten aus PCBN- bzw. CBN-Werkstoffen extrem hart sind, sind die aus dem Stand der Technik aus diesen Materialien bekannten Schneidplatten nicht mit solchen Spannmulden versehen. Bei den aus dem Stand der Technik bekannten Schneidplatten aus PCBN- bzw. CBN-Werkstoffen wird zur Befestigung in einem Schneidwerkzeug ein Klemmhalter verwendet, der eine Druckplatte aufweist, die auf der Schneidplatte mit Druck aufliegt. Nachteilig an diese Methode ist, dass die Schneidplatte aus PCBN oder einem CBN- Verbundwerkstoff bei ungünstigen Schnitten aus der Verankerung im Klemmhalter herausrutschen oder sich zumindest lockern kann.

Des Weiteren werden bei den aus dem Stand der Technik bekannten Schneidplatten aus PCBN- bzw. CBN-Werkstoffen auch durchgehende Bohrungen in der Mitte der Schneidplatte eingebracht, durch die die Schneidplatte auf dem Klemmhalter zu fixieren ist. Nachteilig an dieser Methode ist, dass die Schneidplatten durch die Bohrung geschwächt werden und reißen bzw. brechen können.

WO 03/015968 beschreibt ein Verfahren zur Herstellung einer Schneidplatte aus CBN, wobei durch Laserbearbeitung eine Spannmulde nach dem Sintern eingebracht wird.

Aufgabe der vorliegenden Erfindung war daher, Schneidplatten aus PCBN- bzw. CBN-Werkstoffen bereitzustellen, die sicher in einem Klemmhalter befestigt werden können, ohne dass sie die Nachteile des Standes der Technik aufweisen. Außerdem soll die Herstellung vereinfacht werden. Diese Aufgaben werden durch ein Verfahren gemäß Anspruch 1 gelöst.

Die Schneidplatten aus PCBN- bzw. CBN-Werkstoffen werden mit einer Spannmulde versehen. Die Schneidplatten aus PCBN- bzw. CBN-Werkstoffen mit Spannmulde lassen sich auf diese Weise wie die herkömmlichen, nicht aus diesen Werkstoffen hergestellten Schneidplatten über die Klemmpratze des Klemmhalters im Klemmhalter spannend befestigen. Hierdurch entsteht eine formschlüssige Klemmung, durch die die erfindungsgemäßen Schneidplatten aus PCBN- bzw. CBN-Werkstoffen mit Spannmulde fest im Klemmhalter verankert sind. Ein Herausrutschen aus dem Schneidwerkzeug oder ein Lockern der Schneidplatten aus PCBN- bzw. CBN-Werkstoffen mit Spannmulde ist auf diese Weise nicht mehr möglich.

Erfindungsgemäß wird die entsprechende Kontur der Spannmulde über eine entsprechende Formgebung des Grünkörpers eingebracht und der so hergestellte Grünkörper getrocknet und gesintert.

Erfindungsgemäß ist die Spannmulde, wie in der DE 102 08 266 A1 beschrieben, kreisförmig ausgebildet und weist in der Mitte eine kugel- bzw. kreisförmige Erhebung auf. Ein an diese Erhebung angepasster kreisförmiger Ring am Nocken des Druckstücks umgreift die Erhebung in der Spannmulde, wodurch die Schneidplatte im Klemmhalter spannend befestigt wird. Hierdurch ist ein optimaler Sitz der erfindungsgemäßen Schneidplatte im Schneidwerkzeug sichergestellt.

Bevorzugt werden die Schneidplatten aus PCBN- bzw. CBN-Werkstoffen mit Spannmulde als Wendeschneidplatten hergestellt, d.h. die vorgesehene Spannmulde wird auf zwei gegenüberliegenden Seiten der Schneidplatte eingebracht.

Aufgrund ihrer extrem hohen Härte und ihres festen Sitzes im Schneidwerkzeug eignen sich die Schneidplatten aus PCBN- bzw. CBN-Werkstoffen mit Spannmulde besonders gut für besonders anspruchsvolle, die Schneidplatte extrem belastende Verwendungszwecke. Beispielhaft genannt sei die Schruppbearbeitung von Grauguss. Auch bei weniger anspruchsvollen Verwendungszwecken bringen die Schneidplatten aus PCBN- bzw. CBN-Werkstoffen mit Spannmulde durch die Verlängerung der Standzeiten Vorteile.

## Patentansprüche

1. Verfahren zur Herstellung einer Schneidplatte aus PCBN oder einem CBN-Verbundwerkstoff, wobei die Schneidplatte eine Spannmulde aufweist, die Spannmulde kreisförmig ausgebildet ist und in der Mitte eine kugel- bzw. kreisförmige Erhebung aufweist, und die entsprechende Kontur der Spannmulde über eine entsprechende Formgebung des Grünkörpers eingebracht und der so hergestellte Grünkörper getrocknet und gesintert wird.

## Claims

1. Method for producing a cutting plate made from PCBN or a CBN composite material, wherein the cutting plate has a clamping trough, the clamping trough is formed in a circular manner and in the centre has a spherical or circular elevation, and the corresponding contour of the clamping trough is introduced by correspondingly shaping the green body, and the green body thus produced is dried and sintered.

## Revendications

1. Procédé de fabrication d'une plaquette de coupe en PCBN (nitrure de bore cubique polycristallin) ou en matériau composite à base de CBN, laquelle plaque de coupe présente un creux de serrage, lequel creux de serrage est de forme circulaire et porte en son milieu une saillie de forme sphérique ou circulaire, et dans lequel procédé on forme le contour correspondant du creux de serrage grâce à un façonnage correspondant du corps cru, on fait sécher le corps cru ainsi préparé et on le fritte.
